# EUROPEAN PATENT APPLICATION

(11) **EP 2 511 327 A2**
(43) Date of publication of application: **17.10.2012**
(21) Application number: 11007857.3
(22) Date of filing: 28.09.2011
(51) Int. Cl.: C08J 9/00, B29C 44/34, B01F 7/00

(54) **Process to manufacture a composite foam**

(30) Priority: 14.04.2011 IT MI20110632
(71) Applicant: SAPSA BEDDING S.R.L., 20121 Milano (MI) (IT)
(72) Inventor: Abrigo, Luciano, 15100 Alessandria (AI) (IT); Villa, Renzo, 20062 Cassano d`Adda (MI) (IT); Stafforini, Daniele, 27058 Voghera (PV) (IT)
(74) Representative: Tansini, Elio Fabrizio

(57) **Abstract**

Process to manufacture a composite foam comprising at least two foams with cellular structure, at least one of them being a latex foam.

Present process avails itself of the steps of:
a) preparing separately the forming mixtures of said foams of cellular structure;
b) mixing independently the one from the other said forming mixtures;
c) foaming separately each of said forming mixture;
d) sending separately the foams obtained at step c) into a single mixing installation
e) mixing the foams till to manufacture the composite foam.

Preferably the composite foam is deposited on a laying surface to form rest articles for example mattresses provided with recesses.

## Description

The present invention refers to a process to manufacture a composite foam and more specifically to a composite foam comprising at least two foams of cellular structure, at least one of them being a latex foam.

The present process is characterized by the fact that starting from the step of preparation up to the step of foaming, each foam is foamed separately from the others and all the foams already formed are then mixed together to obtain a composite foam.

It is known that all the foams of cellular structure, for example polyurethanes with cellular structure, are prepared by means of the generation of a gas during the polymerization of a liquid reacting mixture comprising a polyol,a isocyanate,a stabilizing agent, a catalyst and one or more blowing agent.

The gas will originate the foaming of the reacting mixture to form the cellular structure.

It is already known that the latex foam is part of the category of foams with opened cells and is characterized by the burst of bubbles during the process of gelification
forming in this way a net of cells connected among them.

This phenomenon brings to the formation of a transpiring structure, soft, compressible and elastic.

Hence foams with opened cells have as main feature an excellent air passage among the same cells and this warrants the transpiring and ventilating to the interior of the material without decreasing the characteristics of thermal isolation.

Sponge for house, car seal, car mat, packaging, car seats are possible applications of foams with opened cells.

It is said that rest articles such as mattresses, pillows, quilting for divans and the like are among the applications to which the invention is particularly directed.

Mattresses having opened cells manufactured using as materials polyurethane or latex foams are already known. Mattresses of foam latex are soft and offer a high comfort, having therefore a great diffusion and appreciation.

Mattresses of polyurethane foams have good features of mechanical resistance and elasticity and lower costs compared with mattresses of latex foam; when of equal carrying capacity are lighter.

It is known from ES 2 272 165 A1 a process to manufacture mattresses using both polyurethane and latex, so exploiting the advantages coming from the characteristics of both materials.

For this purpose this process foresees the steps of laying a continuous layer of polyurethane foam on an advancing metal tape, of laying a layer of foam of not cured latex on the polyurethane layer, so producing a mixture along the contact zone of the two foams.

The foam latex undergoes then a curing step and finally the band of foam material is cut into various pieces of the wished size.

The obtained band has a thickness comprised between 5 and 40 mm.

It is further known from ES 2 138 901 A1a continuous process to manufacture mattresses of latex-polyurethane comprising the step to load a reactor with all the material needed for obtaining a latex polyurethane foam, such as the latex and the forming materials of polyurethane and in some cases the expansible material. The further step is to lay the resulting reaction mass on a moving tape where the forming of foam occurs.

It is also known from patent EP 0 959 099 A1 a process to manufacture a polyurethane foam comprising a rubber latex.

This process foresees that the water needed to the expansion of polyurethane

Is obtained using the water of emulsion of the rubber latex injected upstream from the mixing head for the polyurethane products.

After these steps the latex is incorporated into the final structure of polyurethane originating in the final product of polyurethane improved characteristics of elasticity and non deformability together with a velvet-like surface typical of rubber latex.

It has been ascertained however that the previously cited processes are not satisfying.

The process of patent ES 2 272 165 A1 originates a product having two layers, the first one having only the characteristics of the latex foam and the second one only the ones of the polyurethane foams.

Therefore the final product cannot show for its whole thickness both the characteristics of the polyurethane and the latex; the characteristics of both the material are only shown along the contact zone of the two layers for a thickness of few micron.

The processes of ES 2 138 901 A1 e EP 0 959 099 A1 originate products with a composite foam of latex and polyurethane,

Nevertheless the final product is not homogeneous,

It has been indeed ascertained that the inclusion of bubbles of foam latex into the polyurethane foam originates lines of fracture with consequent premature aging of the product.

Further it is underlined that the field of application of the instant invention is mainly directed to the manufacture of mattresses, at least in a single layer, provided with recesses and high thickness between 12 and 25 cm and preferably between 16 and 25 cm.

On the contrary the processes described previously with reference to the state of art exclude the manufacture of mattresses with high thickness.

Actually it is known that the manufacture of mattresses having great thickness as the ones previously cited requires as an essential condition a production plant provided with a plurality of metal protuberances needed to transmit to the whole cellular mass the heat indispensable to the steps of gelation and vulcanization. For these cases the number of protuberances may be between 10 and 24 protuberances in a square decimeter and each protuberance may have a considerable height for example of 11 cm for a mattress having total thickness of 17 cm.

All the previously cited processes of the state of art have no protuberances; these processes cannot be therefore suitable for manufacture of mattresses with great thickness and with recesses.

Thus in the first aspect the invention relates to a process to manufacture a composite foam with predetermined characteristics comprising foams of cellular structure, at least one of said foams of cellular structure being a latex foam, said process being characterized by the steps of:
a) preparing separately the forming mixtures of said foams of cellular structure;
b) mixing independently the one from the other said forming mixtures of said foams of cellular structure;
c) foaming separately each of said forming mixture of said foams of cellular structure;
d) sending separately the foams obtained at step c) into a single mixing installation;
e) mixing the foams till to manufacture the composite foams with predetermined characteristics.

It has been found that such composite foams have a deep and a homogeneous mixing among the various foams. Preferably the process is suitable to form a composite foam mixing a latex\foam and a polyurethane foam. Typically the process is characterized by the fact that one of said foams of cellular structure is a polyurethane with opened cells.

Conveniently the process is characterized by the fact of depositing said composite foam on a laying surface,

Therefore it is possible to obtain products of composite foams suitable to form single layers even of limited thickness for a single use such as car mats or to be associated to other layers of foams for padding and the like.

More in detail the process is characterized by the fact of laying such a composite foam on a metal surface provided with metal protuberances.

By means of such a process is possible to obtain in a single mold articles of composite foams with recesses molded by the cited protuberances; said layers of foams with recesses may form blocks of composite foams with thickness from 16 to 20 cm and more, suitable to manufacture mattresses or pillows

In a further aspect the invention refers to a single mixing installation to form a composite foam manufactured according to the previously mentioned process comprising a stator, a rotor with central shaft and a plurality of blades connected to said shaft, characterized by the fact that :
a) the blades are substantially parallel among them;
b) the angle " α " of blade with respect to the rotor axis X-X is: 30° < α < 90°;
c) the angle of rotation "β" of blade with respect to the perpendicular to the rotor axis X is: 0° < β < 50°.
d) the torsion " θ " of the blade on its own central axis (t) is comprised between 0° and 60°.

In the following part of description said single mixing installation will be named "Blender"

The present invention will be now further described by means of the enclosed figures, made by way of example without any limiting intention, where;
FIG.1 shows schematically a plant to carry out the process according to the invention;
FIG.2 shows a cutting device of a continuous layer of a composite foam manufactured by the plant of figure 1;
FIG 3 shows in a partial perspective a mattress manufactured with the plant of figures 1,2;
FIG.4 shows along an axial section a mixing installation according to the process of the invention;
FIG.5 shows schematically in a sight from the top a partial configuration of a particular element of figure 4;
FIG.6 shows schematically in a sight from the top a further partial configuration of a particular element of figure 4;
Fig.7 shows in a partial perspective a torsion of the particular element of figures 5, 6
around its central axis.

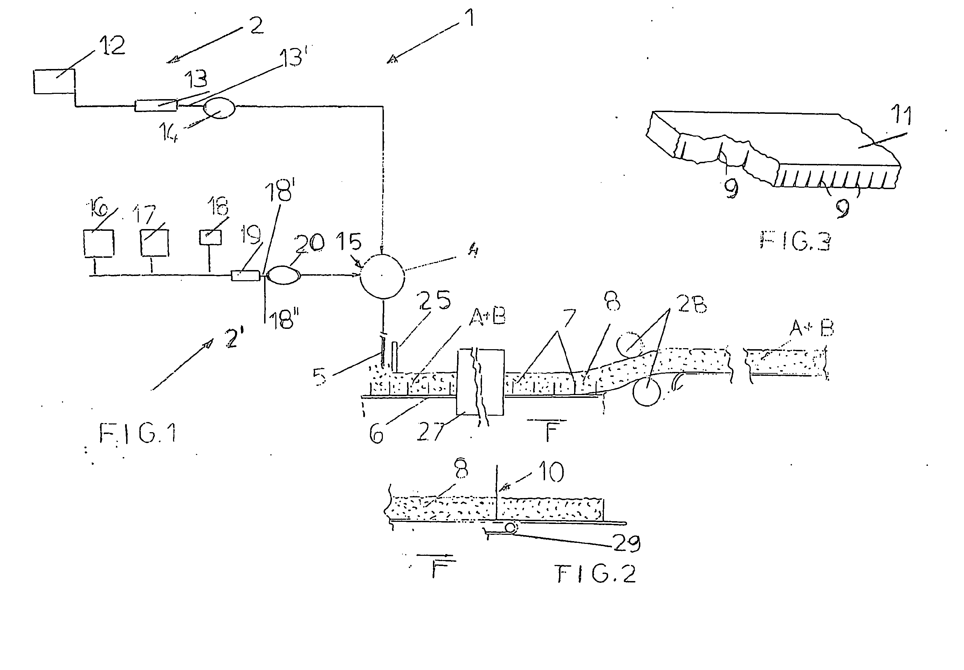

In figure1 a plant to manufacture a composite foam consisting of two foams, preferably a first A of latex and a second B of polyurethane is shown.

The plant 1 comprises a first stretch 2 to form a latex foam A, a second stretch 2' to form a polyurethane foam B, a single blender 4 to whom the two stretches 2,2' converge to form the composite foam A+B, a depositing device 5 for depositing the composite foam A+B, a laying device 6 of the foam A+B.

T he laying surface comprises a plurality of cantilevered protuberances 7 .

Both the laying surface and the protuberances are made of metal and the latter are preferably of aluminium Said protuberances are in a great number, between 10 and 24 for square decimeter of surface

The laying surface 6 is continuously moved according to the longitudinal direction F and is integrant part of an advancing system, later on described in detail.

Shortly said advancing system is suitable to manufacture a continuous layer of composite foam 8 (fig.1-3) provided with recesses 9 molded by the protuberances 7.

Plant 1 comprises a cutting station 10 (fig.2) where the continuous layer of composite foam (A+B) undergoes a plurality of cuts transversal to the longitudinal direction F to obtain blocks of composite foams for mattresses 11 (fig.3).

T he two stretches 2,2' are now described up to the device 5 for depositing the composite foam A+B.

The main characteristic of the invention consists in the fact that the steps of preparation and mixing and foaming suitable to form the two foams A and B have been carried out separately and the two foams when already close to the programmed density are associated together in a single mixing point before being deposited on the laying surface 6.

The two stretches 2,2' are described below schematically as rectilinear tracts, omitting for simplicity many of the tubes and valves, no jeopardizing however the understanding of the invention.

Stretch 2 comprises a tank 12 whose interior part is occupied by a latex mixture of natural or synthetic latex or a mixture of both and the respective components.

As it is known latex is a dispersion of a rubber polymer in an aqueous serum.

Hereinafter the word components refers to various substances, materials or charges whose presence is needed to carry out the process steps to manufacture an article of latex foam.

The various raw material before being added to the latex have been transformed in an aqueous dispersion using milling devices (not shown) so that the particles are reduced to the size of few micron.

It was found convenient not introducing a gelating agent among the components inside tank 12.

The mixture exiting from tank 12 is sent, together with a predetermined air quantity by means of a pump 13 along the conduit of stretch 2 up to reach the foaming machine 14.

Such a foaming machine may be of the kind known as "Oaks" where the latex mixture together with an air flux is sent to the center of a circular stator provided with concentric rows of flat teeth

A rotor provided with a similar arrangement of teeth rotates so that the two groups of teeth will be reciprocally alternated leaving room to allow the mixture of latex and air to pass towards the outside circonference.

During the transit from the center to the circumference, the latex mixture with air undergoes an intense mixing.

Micro air bubbles are formed owing to the presence of air and are incorporated into the latex mixture, forming the foam.

Substantially a continuous flux of uniform and fine cellular foam is originated. At the exit of the foaming machine 14, the formed foam A is sent to the "blender" 4 where is mixed with the foam B coming from stretch 2' and with its geling agent 15.Preferably said geling agent is a fluorosilicate of sodium or potassium.

The gelification may be defined as a homogeneous coagulation of the latex mixture allowing the foam to assume a physical status called of "gel" where the mass becomes thick.

The gelification step avoids that the foam after the laying on the surface 6 may collapse.

Advantageously the lack of the gelling agent in the foaming machine 14 avoids the risk of a possible premature gelification having as consequence the unwanted kneadings in the same mixture.

Then the latex foam is sent along stretch 2 to the inlet of the single mixing installation hereinafter called blender "4 (ig.1,4).

The latex foam comes to the "blender" 4 having already a predetermined density controlled by the ratio between latex and air inside the foaming machine 14.

According to the example of description said density of the latex foam A comprising its aqueous component is between 70 e 200 grams/liter.

It is described now the stretch 2' aimed to form the polyurethane foam B.

The stretch 2' comprises at one side two tanks 16,17 and a container 18, all of them having their respective exits joined to a duct along stretch 2'. The first tank 16 includes the component polyol or equivalent component.

The second tank 17 comprises the component isocyanate or equivalent component and the tank 18 comprises the catalysts needed to form the polyurethane foam.

Along the stretch 2'a pump 19 delivers the two components to a usual mixing head 20.

It is possible further to insert both water 18'and air 18" (fig.1) with the aim to obtain suitable characteristics of the material in the step of foaming.

In particular said added ingredients (air and water) may be used to modify the characteristics of density, viscosity, stiffness and permeability of the flux arriving from 2'.

In the mixing head 20 all the components undergo a strong homogenization carried out by a stirrer (not shown) functioning at variable speed.

The reaction among the components originates an expansion with consequent formation of foam B.

In the example of realization described the polyurethane foam B has density between 15 and 100 gram/liter.

The foam of polyurethane from mixing head 20 is sent to the inlet of "blender"4.

Therefore, according to the main characteristic of the invention, latex foam A and polyurethane foam B , separately formed along stretches A and B, are joined together only in the blender 4 forming the composite foam A+B.

Suitably at the inlet of blender 6 the ratio between the delivery capacity of the latex foam and the delivery capacity of the polyurethane foam is ≥ 0,5.

One of the preferred ratio between the delivery capacity of the foam latex and polyurethane foam can be determined by values ≥ 2.

According to an example the delivery capacity of the foam latex is of 10 kg/minute and the delivery capacity of the polyurethane foam is of 3 kg/minute.

it has been found advantageous to use an innovative solution in the blender 4 consisting in the disposal and orientatio of its elements as will be clear from the following description

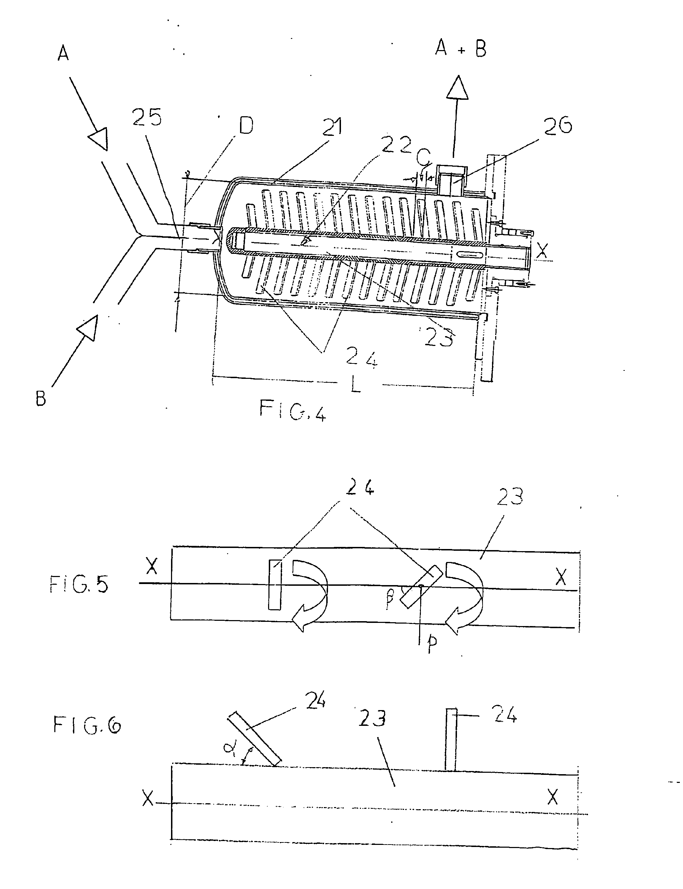

As clearly shown in figure 4 the blender 4 comprises a stator 21 having a cylindrical cavity to form the mixing chamber, a rotor 22 consisting of a central shaft 23 with longitudinal axis x-x horizontally directed and of a plurality of transversal mixing elements connected to the shaft 23.

Preferably said mixing elements are blades 24 having flat shape and thickness between 3 and 6 mm.

The cylindrical cavity of the stator defines the mixing chamber of foam A and B..

The blender comprises at one end the entrance 25 and laterally, towards the bottom the exit 26, to allow the flowing out of the mixed foam A+B.

The blades 24 have an opening angle towards the entrance 25.

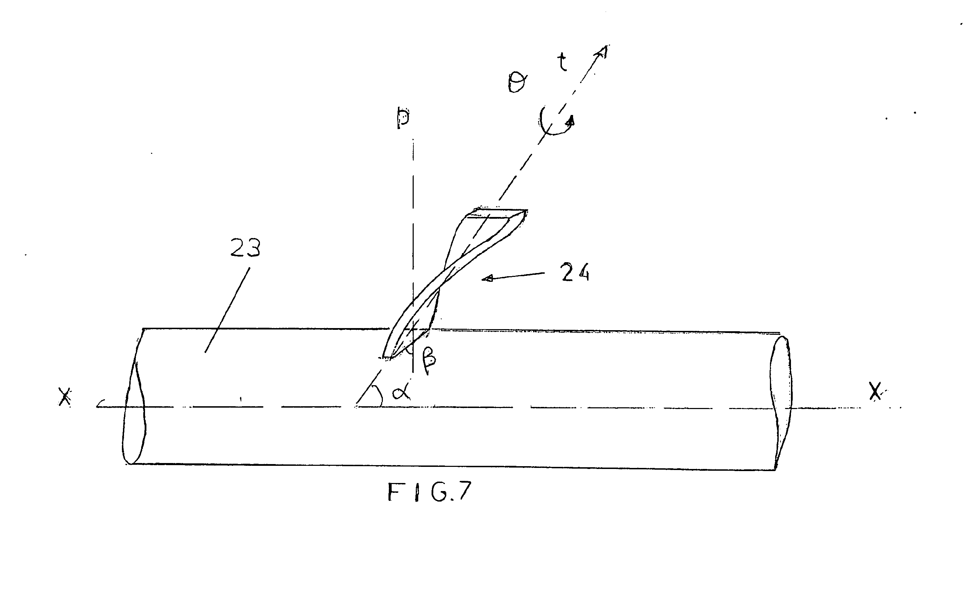

The favourable result of a homogeneous composite foam A+B having density between 25 and 160 gram/liter is due, at least in a great part, to the following characteristics of the blender 4:
a) the blades 24 are substantially parallel, all of them maintaining the same direction with respect to the shaft 23;
b) the angle " α " of blade 24 with respect to the rotor axis X-X is: 30° < α < 90° and preferably comprised between 70° and values lower than 90° (fig.6);
c) the angle of rotation "β" of blade (24) with respect to the perpendicular "p" to the rotor axis X is: 0° < β < 50° and preferably between 10* and 30°;
d) the torsion of the blade (24) on its own central axis (t) is comprised between 0° and 60° (fig.7).

It is pointed out here that figures 5 and 6 show, according to sights from the top, examples related to angles α and β; to a better clarify it is underlined that the blade 24 of figure 6 inclined for the angle α on axis X-X, must be then rotated around the perpendicular "p" to the axis X-X of an angle of rotation β and subsequently undergo a torsion θ around its central axis "t" (fig,7).

Substantially each blade 24 is connected to the shaft 23 having taken a configuration characterized by the presence both of angle α and angle β as well as of angle θ with reference to the values of the ranges previously described.

The values of the angle α near to 90° could determine, besides a mixing of the foams A and B, some phenomena of shearing stress on the mixing, so that values of angles between 70° and 85° are preferred.

The values of the angle β previously described are restrained between determined limits to avoid that, increasing the values of the angle, phenomena of coagulation of latex with unwanted consequence of skin formation may occur.

The blender 4 comprises the following further characteristics:
e) "D" = diameter of the stator comprised between the range of values: 50 mm < D < 400 mm;
f) "L" = length of the stator comprised between the range of values 0,5 D < L < 2D;
g) "H"= length of the blades 24 is associated to the diameter D by the relation: 0,05 D < H < 0,4 D;
h) "C"= distance between the blades 24 associated to the diameter "D" by the relation 0,05 < C <0,3.

Preferably the blades number is comprised between 50 and 200.

Conveniently the rotational speed "V" of the rotor is : 100 < V < 1500 rpm.

Preferably the working temperature T into the chamber (21) is comprised between 8° and 40° degrees centigrade.. Advantageously it has been found that that the feature of blender 4 with its gelling agent allow the homogeneous mixing of the polyurethane foam and of the latex foam avoiding detachment of the particles and their following adhesion on the surface of the blades.

Therefore it is possible to maintain for a long time the functioning of the blender with no interruptions for cleaning operation on and between the blades 24.

Starting from the blender 4 it is now resumed the description of a further part of the plant.

Said further part is related to the final manufacture of a continuous layer of a composite foam A+B made according to the invention.

Hereinafter the main elements of the further part of the plant 1 are summed up.

As clearly shown in figure 1, the composite foam A+B exiting from blender 4 is delivered to the depositing device 5 and from the latter one above the laying surface 6 and among the protuberances 7.

The deposit device 5 is moved transversally with respect to the laying surface 6 in its turn directed along the direction F.

Following the combined movements, transversal of the deposit device 5 and advancing of the laying surface 6, the composite foam A+ B is accumulated forming a cellular mass whose height is controlled by the doctor blade 25. The composite foam associated to the laying surface 6 crosses the device 27 consisting of a tunnel heated by steam.

Device 27 is subdivided into two subsequent heating chambers, respectively the first one for gelifying the composite foam A+B , the second one for the vulcanization and the consequent stabilization of the continuous layer 8.

Then at the exit of the vulcanizer the continuous layer 8 is extracted from the layer surface by means of suitable extraction means.

Said means are simply shown in figure 1 by means of a couple of opposite rollers 28 between which the continuous layer is extracted owing to friction.

In the final part of the plant 1 or in a further device the continuous layer 8 advances on a moved tape 29 up to a cutting station 10 where it undergoes cuts transversal to the longitudinal direction F so forming a plurality of blocks of composite foam with recesses 9 (fig.3).

Said blocks of foams with recesses are suitable to form cores of mattresses11 or part of mattresses.

The mattress of composite foam according to the invention with respect to a mattress made only of latex foam has the advantage of a greater carrying capacity and/or a low weight.

For example a single 2 meter long and 1 meter wide mattress made with foam A+B with respect to a mattress made only with a latex foam having the same size and the same carrying capacity has a reduced weight equal to 10% or higher.

The previous description has been made making reference to a metal laying surface 6 continuously advancing.

It is underlined that such a laying surface could be made according to various realizations for example as described in patents EP 0 955 144 or in patent

EP 1 361 033 here incorporated in case it would be necessary to examine some details.

Shortly it is reminded here that the laying surface according to the mentioned patents foresees a plurality of trucks each of them provided with a laying surface and a plurality of protuberances.

The trucks are part of a ring-shaped movement transmission along two parallel stretches connected by two pulleys, respectively driving and driven.

The trucks of the upper stretch are each other in contact being pushed from the driving pulley and receive the composite foam from an injection device; at last they pass through a curing tunnel.

The trucks of the lower stretch devoid of foam are less in number that the ones of the upper stretch and have a higher speed.

It is also pointed out that the process of invention foresees other possible realizations in addition to those previously shown.

For example the exit of blender may be associated to a deposit device 5 suitable to pour the composite foam A+B on a moved laying surface to form a thin layer of composite foam to be put under a rubber layer of greater consistency.

In this way the thin layer of rubber put, for example in a car mat can realize means avoiding slidings.

Further the exit of blender 4 may be associated to a deposit or pouring device suitable to fill with the composite foam A+B a single mold aimed to form products such as the ones indicated in the state of art and in the present description.

## Claims

1. Process to manufacture a composite foam with predetermined characteristics comprising foams of cellular structure, at least one of said foams of cellular structure being a latex foam, said process being **characterized by** the steps of:
a) preparing separately the forming mixtures of said foams of cellular structure;
b) mixing independently the one from the other said forming mixtures of said foams of cellular structure;
c) foaming separately each of said forming mixture of said foams of cellular structure;
d) sending separately the foams obtained at step c) into a single mixing installation (4);
e) mixing the foams till to manufacture the composite foams with predetermined characteristics.

2. Process according to claim 1 **characterized by** the fact of manufacturing a composite foam A+B consisting of two foams having cellular structure, one of said cellular structure being a latex foam (A) and the other being a polyurethane foam (B).

3. Process according to claim 1 o 2 **characterized by** the fact that one of said foams of cellular structure is a polyurethane with opened cells.

4. Process according to claims 1 or 2 or 3 **characterized by** the fact of depositing (5) said composite foams on a laying surface (6).

5. Process according to claim 4 **characterized by** the fact that said laying surface is a metal surface in continuous movement.

6. Process according to claim 5 **characterized by** the fact that laying surface is a metal surface (6) with metal protuberances (7).

7. Process according to claim 2 **characterized by** the fact that said two foams of latex (A) and of polyurethane (B) are sent to the single mixing installation (4) with a ratio between the flow of latex foam and the flow of the polyurethane foam ≥ 0,5.

8. Process for manufacturing a composite foams according to claim 1 suitable to produce a continuous layer (8) with recesses (9) of said composite foam **characterized by** the steps of:
- depositing said composite foams on laying surface (5) provided with protuberances (7) suitable to shape said recesses (9);
- advancing said laying surface (6) between a depositing station (5) of said composite foam and an extraction station (28) of said continuous layer (8);
- of gelating:
- of vulcanizing (27);
- of extracting said continuous layer (8).

9. Mixing installation (4) of a composite foams manufactured according to the process of claim 1 comprising a stator (21) with cavity forming a mixing chamber, a rotor (22) with central shaft (23) and a plurality of blades (24) connected to said shaft, **characterized by** the fact that :
a) the blades are substantially parallel among them;
b) the angle " α " of blade (24) with respect to the rotor axis X is: 30° < α < 90°;
c) the angle of rotation "β" of blade (24) with respect to the perpendicular to the rotor axis X is: 0° < β < 50°.
d) the torsion " ϑ " of the blade (24) on its own central axis (t) is comprised between 0° and 60°.

10. Mixing installation according to claim 9 **characterized by** the fact that:
e) "D" = diameter of the stator comprised between the range of values 50 mm < D < 400 mm;
f) "L" = length of stator comprised between the range of values 0,5 D < L < 2D;
g) "H"= length of blade (24) associated to the diameter D by the relation:
0,05 D < H < 0,4 D;
h) "C"= distance between blades (24) associated to the diameter "D" by the relation 0,05 < C <0,3.

11. Mixing installation according to claim 9 **characterized by** the fact that the rotational speed "V" of the rotor is : 100 < V < 1500 rpm

12. Mixing installation according to claim 9 **characterized by** the fact the working temperature T into the chamber (21) is comprised between 8° and 40° grades centigrade.

13. Mixing installation according to claim 9 **characterized by** the fact that the blades number is between 50 and 200.
